# FASCICULE DE BREVET EUROPEEN

(11) **EP 2 608 187 B1**
(45) Date de publication et mention de la délivrance du brevet: **23.08.2017**
(21) Numéro de dépôt: 12196209.6
(22) Date de dépôt: 10.12.2012
(51) Int. Cl.: G08G 5/00, G05D 1/00

(54) **Système de gestion de vol en espace aérien ségrégé pour aéronef**
Flugsteuersystem für Luftfahrzeug in einem abgesonderten Luftraum
System for flight management of aircraft in segregated airspace

(30) Priorité: 20.12.2011 FR 1103945
(43) Date de publication de la demande: 26.06.2013
(73) Titulaire: Thales, 92400 Courbevoie (FR)
(72) Inventeur: Besse, Paul, 33320 Eysines (FR)
(74) Mandataire: Bréda, Jean-Marc

(56) Documents cités:
- WO-A1-2011/012156

## Description

Le domaine de l'invention est celui de l'avionique et des systèmes de mission embarqués sur aéronef pour des opérations de type patrouille maritime, surveillance maritime, recherche et sauvetage connue sous la terminologie « Search and Rescue » et/ou des missions d'observation. Les aéronefs concernés sont des drones, des hélicoptères ainsi que certains porteurs à voilure fixe. L'aéronef effectue ces opérations et ces missions particulières en espace aérien dit ségrégué, c'est-à-dire un espace aérien qui n'est pas régi par les règles et les procédures de l'aviation civile.

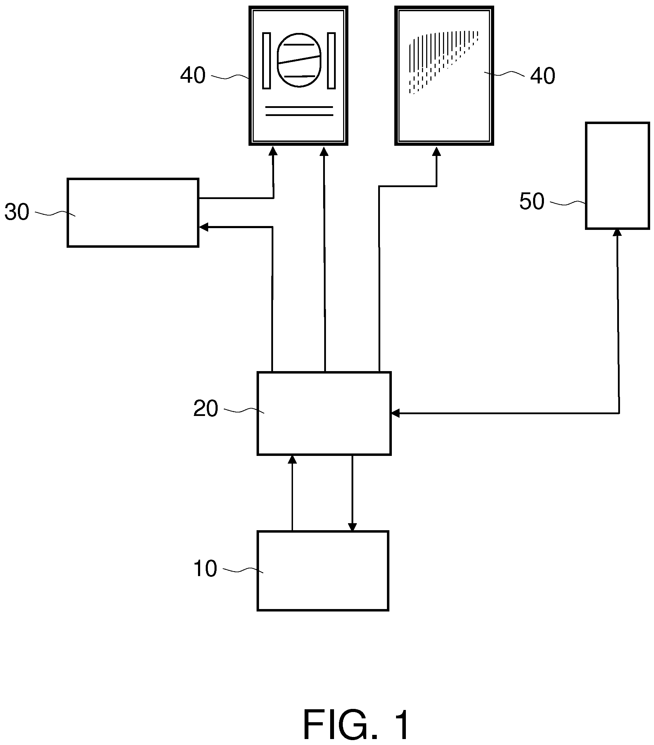

Un système de gestion de vol d'aéronef apte à effectuer ce type de mission est représenté en figure 1. Il comporte les éléments suivants :
- Un calculateur de mission 10 ;
- Un calculateur de gestion de vol ou « FMS » 20 ;
- Un pilote automatique et un directeur de vol 30 ;
- Des dispositifs de visualisation 40 affichant des informations de pilotage et de navigation ;
- Une interface homme-machine 50 permettant d'interagir avec le calculateur de gestion de vol.

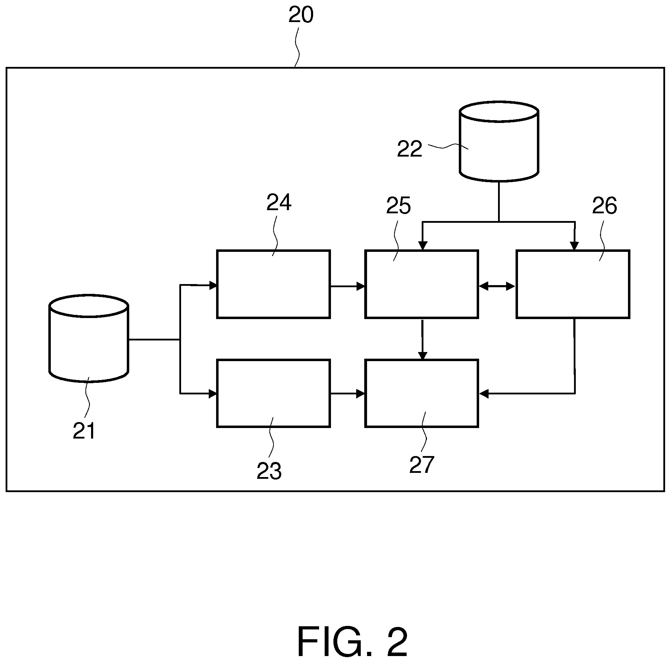

La fonction du calculateur de mission 10 est de fournir au calculateur de gestion de vol 20 un plan de vol. La figure 2 représente la structure du calculateur de gestion de vol. Il comporte essentiellement :
- une base de données de navigation 21 et une base de données de performances de l'appareil 22 ;
- des moyens de calcul de localisation 23 couplés aux différents capteurs de l'appareil ;
- des moyens d'élaboration des consignes d'un plan de vol 24 ;
- des moyens d'élaboration de la trajectoire 25 à partir desdites consignes du plan de vol et de la base de données de performances de l'appareil 22 ;
- des moyens d'élaboration de prédictions 26 concernant le vol ou les capacités de l'appareil ;
- des moyens d'élaboration 27 de consignes de guidage pour le pilote automatique et le directeur de vol ;
- des moyens de génération d'informations graphiques à destination des dispositifs de visualisation. Ces informations concernent la route désirée, la trajectoire suivie les écarts latéraux à cette route et à cette trajectoire, les distances à parcourir, les temps de vol, ...

Certaines missions comme évoquées plus haut obéissent à des consignes particulières dites consignes tactiques qui peuvent être différentes des procédures de l'aviation civile.

Actuellement, la gestion de ces consignes consiste à transférer les consignes tactiques sous forme de plan de vol vers le calculateur de gestion du vol de l'avionique. Ce plan de vol est contrôlé par les pilotes sur les interfaces homme machine de la gestion du vol. Le transfert est effectué selon une interface particulière ou selon une interface standardisée. Une fois le plan de vol de mission transféré au FMS, celui-ci propose un calcul de trajectoire basée sur les logiques de construction héritées du domaine de la gestion du vol civile.

La fonction de gestion du vol assure ensuite le guidage le long de la trajectoire calculée sous la forme :
- d'informations de navigation à afficher au pilote pour l'aider dans sa tenue de trajectoire ;
- d'informations de guidage latéral à destination du pilote automatique et du directeur de vol pour permettre un suivi automatique de la trajectoire pour le pilote automatique ou un suivi aidé de la trajectoire pour le directeur de vol.

Les défauts de cette solution sont de différentes natures et concernent :
- Les algorithmes de traitement : les calculs de trajectoire effectués par une fonction de gestion du vol civile ne correspondent pas toujours aux besoins de la mission. Le calcul de la trajectoire est fait selon les règles de constructions des trajectoires des aéronefs civils. Cette construction n'est pas toujours adaptée aux besoins de la mission tactique en termes de dynamique de manoeuvre et de géométrie ;
- Les références : les positions de référence de la fonction gestion du vol et du calculateur de mission sont différentes, ce qui peut induire des écarts importants sur la trajectoire ;
- La gestion opérationnelle : le principe d'interface entre le système de mission et la gestion du vol impose une charge de travail importante en tête basse pour valider les transferts de plan de vol Cette charge de travail peut être inacceptable dans certaines conditions de vol à basse altitude ou de nuit ;
- La certification et la qualification : la modification de la fonction de gestion du vol de l'avionique nécessite de certifier spécifiquement la fonction. Les logiciels implémentant les fonctions de gestion du vol civile sont des logiciels volumineux et développés selon des standards civils rigoureux qui impliquent des coûts de modification importants ;
- Les interfaces : les contraintes de conception de la fonction de gestion du vol civile ont un impact sur la nature et la structure des informations de plan de vol émises par le système de mission. Ceci conduit à compliquer le couplage et la mise au point du couplage en ne découplant pas les deux mondes avionique et de mission.

Une autre solution consiste à totalement séparer le système avionique civil du système avionique de mission. La demande PCT WO 2011/012156 intitulée « Aircraft Avionics System » décrit un système de ce type. L'inconvénient est que deux systèmes avioniques indépendants sont nécessaires.

Le problème technique est donc de réaliser un couplage optimisé entre le système ou le calculateur de mission qui gère les opérations tactiques et le système avionique pour permettre d'effectuer la navigation de l'aéronef dans la zone de mission le long des trajectoires requises par les opérations de façon optimale.

La solution apportée par le système selon l'invention consiste à ne plus transférer d'informations de plan de vol de la mission vers la fonction de gestion du vol civile mais vers une fonction dédiée. Ce transfert d'informations est amélioré pour ne plus transmettre un plan de vol mais des informations de plus haut niveau permettant de découpler les mondes avionique et de mission. Le système selon l'invention consiste à fournir une fonction de calcul de trajectoire et de guidage latéral pour des phases de vol en espace aérien ségrégué. Cette fonction permet le couplage entre le système de mission du porteur et l'avionique sans remise en cause des fonctions et de l'architecture de l'avionique. Cette fonction permet de réduire la charge de travail de l'équipage pendant les phases de mission en permettant la validation de la trajectoire en utilisant la visualisation de navigation en tête moyenne.

Plus précisément, l'invention a pour objet un système de gestion de vol pour aéronef, ledit aéronef destiné à effectuer des missions dans un espace aérien non ségrégué et/ou dans un espace aérien ségrégué, ledit système comprenant au moins :
- un calculateur de missions ;
- un calculateur principal de gestion de vol ;
- un pilote automatique ;
- des interfaces homme-machine ;
- des dispositifs de visualisation ;
caractérisé en ce que le système de gestion de vol comporte :
- un calculateur de gestion de vol secondaire comprenant des moyens d'acquisition des consignes tactiques issues du calculateur de mission et des moyens de calcul de trajectoire et de guidage latéral de l'aéronef, lesdites consignes tactiques étant différentes des procédures de navigation en espace non ségrégué;
- Des moyens de sélection et de connexion agencés de façon que :
   o lorsque l'aéronef effectue une mission en espace aérien non ségrégué, seul le calculateur principal de gestion de vol est connecté au pilote automatique et aux dispositifs de visualisation, le calculateur de gestion de vol secondaire n'étant pas connecté ;
   o lorsque l'aéronef effectue une mission en espace aérien ségrégué, seul le calculateur secondaire de gestion de vol est connecté au calculateur de missions, au pilote automatique et aux dispositifs de visualisation.

Avantageusement, lorsque l'aéronef effectue des missions dans un espace aérien non ségrégué et /ou dans un espace aérien ségrégué, le calculateur principal de gestion de vol est connecté aux interfaces homme-machine.

Avantageusement, lorsque l'aéronef a un pilote, le système de gestion de vol comporte des moyens d'avertissement signalant quel calculateur de gestion, principal ou secondaire est sélectionné ou connecté.

L'invention sera mieux comprise et d'autres avantages apparaîtront à la lecture de la description qui va suivre donnée à titre non limitatif et grâce aux figures annexées parmi lesquelles :
La figure 1 représente le synoptique général d'un système de gestion de vol pour aéronef selon l'art antérieur ;
La figure 2 représente le synoptique d'un calculateur principal de gestion de vol pour aéronef selon l'art antérieur ;
La figure 3 représente le synoptique général d'un système de gestion de vol pour aéronef selon l'invention ;

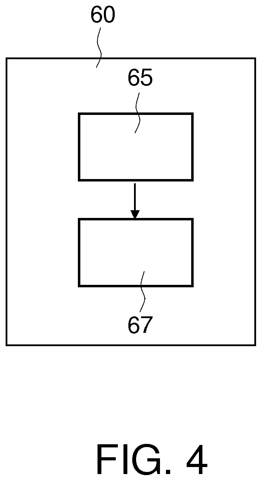

La figure 4 représente le synoptique d'un calculateur secondaire de gestion de vol pour aéronef selon l'invention.

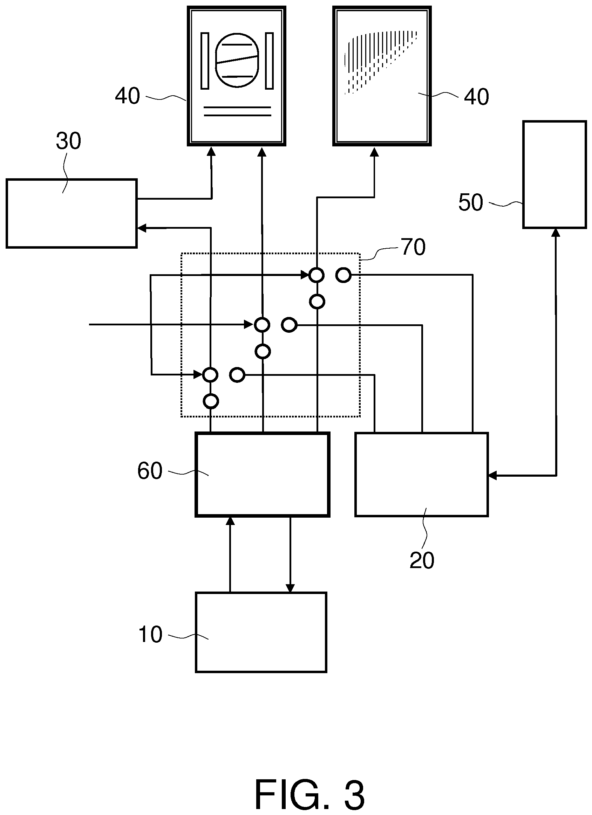

La figure 3 représente le synoptique général d'un système de gestion de vol pour aéronef selon l'invention. Il comprend, comme le système de gestion de vol décrit en figure 1, les éléments suivants :
- Un calculateur de mission 10 ;
- Un calculateur de gestion de vol ou « FMS » principal 20 ;
- Un pilote automatique et un directeur de vol 30 ;
- Des dispositifs de visualisation 40 affichant des informations de pilotage et de navigation ;
- Un interface homme-machine permettant d'interagir avec le calculateur de gestion de vol 50.

Il comporte de plus :
- un calculateur de gestion de vol secondaire 60 représenté en traits gras sur la figure 3 ;
- Des moyens de sélection et de connexion 70 agencés de façon que :
- lorsque l'aéronef effectue une mission en espace aérien non ségrégué, seul le calculateur principal de gestion de vol est connecté aux interfaces homme-machine, au pilote automatique et aux dispositifs de visualisation ;
- lorsque l'aéronef effectue une mission en espace aérien ségrégué, seul le calculateur secondaire de gestion de vol est connecté au calculateur de missions, au pilote automatique et aux dispositifs de visualisation. Le calculateur principal de gestion du vol reste connecté aux interfaces homme-machine de gestion du vol.

Le calculateur de gestion de vol secondaire comporte uniquement, à la différence du calculateur de gestion principal :
- des moyens d'acquisition des consignes tactiques issues du calculateur de mission 65 et ;
- des moyens de calcul 67 de trajectoire et de guidage latéral de l'aéronef, lesdites consignes tactiques étant différentes des procédures de navigation en espace contrôlé. Ces consignes sont transmises soit au pilote automatique ou au directeur de vol présent dans l'avionique, soit au pilote dans le cas d'un pilotage manuel.

Le terme employé de « calculateur de gestion de vol secondaire » est employé par souci de clarté. Il ne signifie pas nécessairement qu'il existe physiquement un deuxième calculateur. Il peut s'agir uniquement de cartes électroniques spécifiques dédiées à cette fonction au sein d'une unité électronique commune, voire d'un logiciel embarqué spécifique réalisant la fonction de gestion de vol. De la même façon, les moyens de connexion et de sélection ne sont pas nécessairement des interrupteurs physiques mais peuvent être des moyens logiciels permettant de sélectionner des fonctions de calcul de gestion de vol plutôt que d'autres.

La connexion au système avionique de l'aéronef est effectuée par une commutation qui permet de déconnecter la fonction de gestion du vol des fonctions avioniques assurées par le calculateur de gestion de vol principal permettant la navigation de l'aéronef au profit du calculateur de gestion de vol secondaire. Ces fonctions de pilotage et de navigation sont assurées par le pilote automatique et/ou le directeur de vol et les affichages de vol. Les interfaces du calculateur secondaire avec l'avionique sont strictement interchangeables avec celles du calculateur principal par la fonction de gestion du vol.

On réalise ainsi, sur commande, le couplage entre le calculateur de mission et l'avionique à l'aide d'un calculateur dédié assurant le calcul de la trajectoire de consigne selon des règles propres aux contraintes de la mission ainsi que le guidage latéral le long de cette trajectoire. Cette trajectoire est présentée à l'équipage pour validation. Le calculateur établit les ordres de guidage pour permettre à l'aéronef de suivre cette trajectoire.

De façon plus précise, le transfert des données entre le calculateur de mission 10 et le calculateur secondaire 60 s'effectue avec un protocole unique de transfert de fichiers qui permet ensuite d'enrichir dans le calculateur de mission le nombre de « patterns » à voler sans impact sur l'interface entre le calculateur de mission et le calculateur secondaire. On entend par pattern une partie continue de la trajectoire de vol. Une fois les patterns acquis par le calculateur secondaire, ils sont convertis en segments de vol standardisés selon des règles spécifiques à chaque pattern.

Ces segments de vol sont ensuite chainés entre eux pour permettre le calcul de la trajectoire de consigne. Le chainage consiste à déterminer la trajectoire de transition entre les différents segments. Ce principe est commun aux deux calculateurs mais diffère dans l'exécution par la création de nouveaux segments de vol propres aux besoins de la mission.

La trajectoire consiste donc en une série de segments de vol rectilignes et de virages. Selon les besoins de la mission, cette trajectoire est fixe ou s'adapte aux évolutions de l'aéronef.

La longueur des segments rectilignes ainsi que la longueur des virages est adaptée par un principe de paramétrage pour tenir compte des caractéristiques de l'aéronef et du système de pilotage automatique. Ce paramétrage porte sur les valeurs de mise en roulis et de roulis maximum autorisé en virage lorsque le pilote automatique ou le directeur de vol est actif.

Une fois la trajectoire calculée, elle est transmise au système avionique pour permettre la visualisation aux pilotes. Cette transmission s'accompagne d'une alarme visuelle qui prend plusieurs formes :
- désengagement du mode de navigation latérale du pilote automatique ou du directeur de vol ;
- alarme visuelle de changement de trajectoire de consigne

L'acceptation par les pilotes de cette nouvelle trajectoire se fait par le réengagement du pilote automatique ou du directeur de vol sur cette trajectoire de consigne, ou par acquittement de l'alarme visuelle.

Un mode automatique est aussi proposé dans lequel les mises à jour de trajectoire ne génèrent pas d'alarme visuelle.

Lorsque la nouvelle trajectoire est acceptée par les pilotes, le calculateur secondaire fournit les informations de guidage au pilote automatique et au directeur de vol du système avionique. Cette trajectoire est aussi envoyée au calculateur de mission pour affichage et contrôle par l'opérateur de mission.

Pour calculer les informations de guidage, le calculateur secondaire doit disposer d'une position. Cette position est soit celle fournie par la fonction de gestion du vol de l'avionique soit, préférentiellement, la position fournie par le système de mission et dont se sert le calculateur de mission.

En complément, les informations de navigation classiques sont fournies pour affichage au système avionique.

Ces informations sont :
- la route-sol de consigne qui correspond à la route désirée ;
- l'écart latéral par rapport à la route ;
- la distance vers le prochain point de destination ;
- le temps de vol vers le prochain point de destination ;
- le relèvement du prochain point de destination.

Cette implémentation d'un second calculateur selon l'invention apporte les avantages suivants :
- Flexibilité des algorithmes : Les calculs de trajectoire effectués dans la nouvelle fonction sont adaptés aux besoins de la mission en terme de géométrie de la trajectoire, de logique d'enchainement entre les différentes branches de la trajectoire et de caractéristiques de vol comme le roulis ou le taux de mise en roulis de l'aéronef ;
- Utilisation de la même source de position que le calculateur de mission ;
- Amélioration des capacités opérationnelles : Le principe de validation d'un nouvel envoi de plan de vol par le système de mission utilise les différents afficheurs et des graphiques qui permettent une représentation plus intuitive de la trajectoire, réduisant ainsi la charge de travail de l'équipage ;
- Simplification de la certification et de la qualification : La fonction gestion du vol civile n'est pas modifiée et l'interface avionique de la nouvelle fonction est identique à celle de la fonction gestion du vol civile. La certification de l'avionique n'est donc pas remise en cause ;
- Simplification et standardisation des interfaces : L'interface entre le système de mission et la nouvelle fonction est tel que le système de mission n'est pas impacté par des modifications de calcul de trajectoire. Le découplage entre le monde mission et avionique est garanti ;
- Diminution des coûts et des délais d'intégration et de couplage :
   La nouvelle fonction est de taille beaucoup plus faible qu'une fonction de gestion du vol civile et génère des coûts bien moindres lors de ses évolutions ultérieures ;
- Simplification de la portabilité : La standardisation des interfaces entre la nouvelle fonction et l'avionique facilite la mise en place ou le « portage » dans différents types d'aéronefs ;
- Sécurisation du vol : La conception du système selon l'invention garantit l'intégrité des informations de navigation pendant la phase de mission.

## Revendications

1. Système de gestion de vol pour aéronef, ledit aéronef destiné à effectuer des missions dans un espace aérien non ségrégué et /ou dans un espace aérien ségrégué, ledit système comprenant au moins :
- un calculateur de missions (10) ;
- un calculateur principal de gestion de vol (20) ;
- un pilote automatique (30) ;
- des interfaces homme-machine (50) ;
- des dispositifs de visualisation (40) ;
- un calculateur secondaire de gestion de vol (60) comprenant des moyens d'acquisition (65) des consignes tactiques issues du calculateur de mission et des moyens de calcul de trajectoire (67) et de guidage latéral de l'aéronef, lesdites consignes tactiques étant différentes des procédures de navigation en espace contrôlé ;
**caractérisé en ce que** le système de gestion de vol comporte :
- Des moyens de sélection et de connexion (70) agencés de façon que :
∘ lorsque l'aéronef effectue une mission en espace aérien non ségrégué, seul le calculateur principal de gestion de vol est connecté au pilote automatique et aux dispositifs de visualisation, le calculateur secondaire de gestion de vol n'étant pas connecté ;
∘ lorsque l'aéronef effectue une mission en espace aérien ségrégué, seul le calculateur secondaire de gestion de vol est connecté au calculateur de missions, au pilote automatique et aux dispositifs de visualisation.

2. Système de gestion de vol pour aéronef selon la revendication 1, **caractérisé en ce que**, lorsque l'aéronef effectue des missions dans un espace aérien non ségrégué et /ou dans un espace aérien ségrégué, le calculateur principal de gestion de vol (20) est connecté aux interfaces homme-machine (50).

3. Système de gestion de vol pour aéronef selon l'une des revendications 1 ou 2, **caractérisé en ce que**, lorsque l'aéronef a un pilote, le système de gestion de vol comporte des moyens d'avertissement signalant quel calculateur de gestion, principal ou secondaire est sélectionné ou connecté.

## Patentansprüche

1. Flugmanagementsystem für ein Luftfahrzeug, wobei das Luftfahrzeug zum Ausführen von Missionen in einem nicht unterteilten Luftraum und/oder in einem unterteilten Luftraum bestimmt ist, wobei das System wenigstens Folgendes umfasst:
- einen Missionscomputer (10);
- einen Flugmanagement-Hauptcomputer (20);
- einen Autopilot (30);
- Mensch-Maschinen-Schnittstellen (50);
- Anzeigegeräte (40);
- einen Flugmanagement-Nebencomputer (60), der Mittel (65) zum Erfassen von von dem Missionscomputer ausgegebenen taktischen Anweisungen und Mittel (67) zur Flugbahnberechnung und Seitenführung des Luftfahrzeugs umfasst, wobei sich die taktischen Anweisungen von Navigationsprozeduren im kontrollierten Luftraum unterscheiden;
**dadurch gekennzeichnet, dass** das Flugmanagementsystem Folgendes umfasst:
- Auswahl- und Verbindungsmittel (70), so ausgelegt, dass:
∘ wenn das Luftfahrzeug eine Mission in einem nicht unterteilten Luftraum durchführt, nur der Flugmanagement-Hauptcomputer mit dem Autopilot und den Anzeigegeräten verbunden ist und der Flugmanagement-Nebencomputer nicht verbunden ist;
∘ wenn das Luftfahrzeug eine Mission in einem unterteilten Luftraum durchführt, nur der Flugmanagement-Nebencomputer mit dem Missionscomputer, dem Autopilot und den Anzeigegeräten verbunden ist.

2. Flugmanagementsystem für Luftfahrzeuge nach Anspruch 1, dadurch gekennzeichet, dass, wenn das Luftfahrzeug Missionen in einem nicht unterteilten Luftraum und/oder in einem unterteilten Luftraum durchführt, der Flugmanagement-Hauptcomputer (20) mit den Mensch-Maschinen-Schnittstellen (50) verbunden ist.

3. Flugmanagementsystem für Luftfahrzeuge nach Anspruch 1 oder 2, **dadurch gekennzeichnet, dass**, wenn das Luftfahrzeug einen Pilot hat, das Flugmanagementsystem Warnmittel umfasst, die signalisieren, welcher Steuercomputer, d.h. der Haupt- oder der Nebencomputer, gewählt oder verbunden ist.

## Claims

1. A flight management system for aircraft, said aircraft being intended to carry out missions in a non-segregated airspace and/or in a segregated airspace, said system comprising at least:
- one missions computer (10);
- one main flight management computer (20);
- one automatic pilot (30);
- human-machine interfaces (50);
- display devices (40);
- one secondary flight management computer (60) comprising means (65) for acquiring tactical instructions from said missions computer and means (67) for computing the trajectory and for laterally guiding said aircraft, said tactical instructions differing from controlled airspace navigation procedures;
**characterised in that** said flight management system comprises:
- selection and connection means (70) that are arranged so that:
∘ when said aircraft carries out a mission in a non-segregated airspace, only the main flight management computer is connected to said automatic pilot and to said display devices, said secondary flight management computer not being connected;
∘ when said aircraft carries out a mission in a segregated airspace, only said secondary flight management computer is connected to said missions computer, to said automatic pilot and to said display devices.

2. The flight management system for aircraft according to claim 1, **characterised in that**, when said aircraft carries out missions in a non-segregated airspace and/or in a segregated airspace, said main flight management computer (20) is connected to said human-machine interfaces (50).

3. The flight management system for aircraft according to one of claims 1 or 2, **characterised in that**, when said aircraft has a pilot, said flight management system comprises warning means that indicate which management computer, i.e. the main or the secondary computer, is selected or connected.
